# EUROPÄISCHE PATENTSCHRIFT

(11) **EP 0 675 060 B1**
(45) Veröffentlichungstag und Bekanntmachung des Hinweises auf die Patenterteilung: **01.04.1998**
(21) Anmeldenummer: 94890217.6
(22) Anmeldetag: 22.12.1994
(51) Int. Cl.: B65G 49/06

(54) **Vorrichtung zum Stapeln und Entnehmen von tafelförmigen Gegenständen**
Apparatus for stacking and destacking sheet shaped objects
Dispositif pour charger et décharger des objets en forme de plaques

(30) Priorität: 28.03.1994 AT 663/94
(43) Veröffentlichungstag der Anmeldung: 04.10.1995
(73) Patentinhaber: Lisec, Peter, 3363 Amstetten-Hausmening (AT)
(72) Erfinder: Lisec, Peter, 3363 Amstetten-Hausmening (AT)
(74) Vertreter: Beer, Manfred, Dipl.-Ing.

(56) Entgegenhaltungen:
- EP-A- 0 048 334
- DE-A- 2 539 352

## Beschreibung

Die Erfindung betrifft eine Vorrichtung zum Entnehmen von tafelförmigen Gegenständen, insbesondere Glasscheiben aus Stapeln mit den Merkmalen des unabhängigen Anspruches 1.

Es ist bekannt, tafelförmige Gegenstände, insbesondere Glasscheiben etwa vertikal stehend an Rahmen, Stützwänden od.dgl. abzustapeln, die um etwa 6 bis 8° aus der Vertikalen nach hinten geneigt sind. Dabei kann an dem Rahmen nur eine einzige Glasscheibe, es können aber auch mehrere Glasscheiben abgestapelt sein. Insbesondere, wenn mehrere Glasscheiben am Rahmen abgestapelt und die Platzverhältnisse vor dem Rahmen beengt sind, bereitet es Schwierigkeiten, eine einzelne Glasscheibe zu entnehmen.

Eine Vorrichtung der eingangs genannten Gattung ist aus der DE 25 39 352 A bekant. Dadurch, daß bei der bekannten Vorrichtung der Schubbalken am unteren Rand des Kipptisches vorgesehen ist, kann ein plattenförmiger Gegenstand nur stehend bewegt werden und muß dabei seitlich gestützt werden. Hiezu sind bei der DE 25 39 352 A seitliche Führungen in Form von Lochblechen und Scheibenführungsgittern vorgesehen.

Der Erfindung liegt die Aufgabe zugrunde, eine Vorrichtung zur Verfügung zu stellen, mit der tafelförmige Gegenstände, insbesondere Glasscheiben, einzeln auf einfache Weise aus Stapeln entnommen werden können.

Gelöst wird diese Aufgabe bei einer gattungsgemäßen Vorrichtung mit den Merkmalen des unabhängigen Anspruches 1.

Der Balken mit den Vakuumsaugern kann von der Seite vor den Rahmen geschoben werden, die Vakuumsauger werden an der vordersten Glasscheibe angesetzt, diese wird dann vom Scheibenstapel abgehoben und seitlich vom Rahmen weggefördert. Die Glasscheibe kann anschließend entweder im wesentlichen vertikal stehend oder, nachdem der Kipptisch in seine waagrechte Stellung umgelegt wurde, liegend einer weiteren Bearbeitungsstation z.B. einem Schneidetisch oder einer Fördereinrichtungzugeführt werden.

Bevorzugt dient die erfindungsgemäße Vorrichtung zum Entnehmen von Glasscheiben aus Fächern, die hintereinander angeordnet und von etwa vertikal stehenden Rahmen begrenzt sind. Die Erfindung betrifft daher weiters eine Vorrichtung zum Stapeln und zum Entnehmen von tafelförmigen Gegenständen mit den Merkmalen des Anspruches 8. Mit Hilfe dieser Vorrichtung können einzelne Glasscheiben jedem beliebigen Fach entnommen werden.

Weitere Merkmale und Vorteile der Erfindung ergeben sich aus den Unteransprüchen und der nachfolgenden Beschreibung eines Ausführungsbeispieles der Erfindung unter Bezugnahme auf die Zeichnungen. Es zeigt
Fig. 1 eine Vorderansicht auf eine erfindungsgemäße Vorrichtung und
Fig. 2 eine Ansicht von links auf die Vorrichtung von Fig. 1 und
Fig. 3 einen Schnitt durch die Stützwand im Bereich des Rahmens in vergrößertem Maßstab.

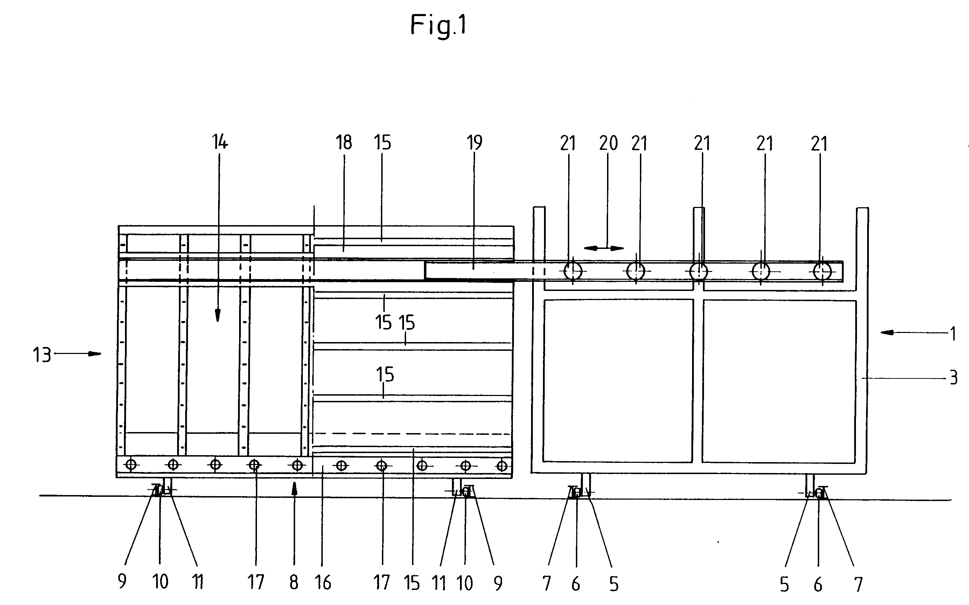

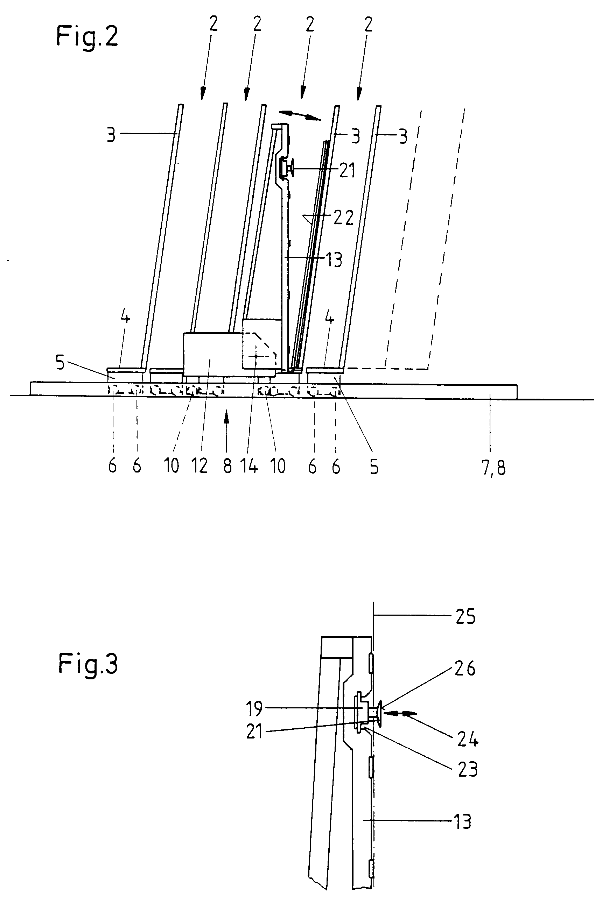

In den Fig. 1 und 2 ist ein Magazin 1 dargestellt, das mehrere hintereinander angeordnete Fächer 2 aufweist. Jedes Fach 2 weist eine von einem Rahmen 3 gebildete Rückwand und eine Auflage 4 auf, auf der die Glasscheiben 22 etwa 6 bis 8° aus der Vertikalen geneigt aufstehen. Die Auflagen 4 können beispielsweise durch Stützrollen mit im wesentlichen horizontalen Achsen gebildet sein.

Unterhalb der Auflagen 4 weist jeder Rahmen 3 ein Paar Träger 5 auf, an welchen paarweise Laufrollen 6 gelagert sind. Die Laufrollen 6 laufen in Schienen 7, die fest mit dem Boden verankert sind. Durch diese Anordnung ist es möglich, über geeignete Antriebe den Abstand zwischen benachbarten Rahmen 3 zu vergrößern, so daß die Entnahme von Glasscheiben erleichtert wird. Das Verstellen des Abstandes zwischen zwei benachbarten Rahmen der Fächer 2 kann beispielsweise über an den Rahmen 3 gelagerte Ritzel erfolgen, die in eine ortsfeste Zahnstange eingreifen, oder über Druckmittelzylinder, wobei ein Druckmittelzylinder immer zwei benachbarte Rahmen 3 miteinander verbindet.

Neben den Fächern 2 ist ein Kipptisch 8 auf Schienen 9 verfahrbar, die parallel zu den Schienen 7 des Magazines 1 verlaufen. Der Kipptisch 8 weist eine Trag- bzw. Unterkonstruktion 12 auf, an der über Träger 11 paarweise Laufrollen 10 gelagert sind, die an den Schienen 9 abrollen. Auf der Unterkonstruktion 12 ist eine Stützwand 13 um eine Schwenkachse 14 aus der Waagerechten um mehr als 90°, vorzugsweise etwa 110°, schwenkbar gelagert. Der Schwenkantrieb der Stützwand 13 an der Unterkonstruktion 12 des Kipptisches 8 kann beispielsweise durch Hydraulikzylinder erfolgen.

Wie in Fig. 1 auf der linken Hälfte der Stützwand 13 dargestellt ist, kann diese entweder durch ein Rollenfeld 14 oder durch Förderbänder 15 , wie auf der rechten Hälfte der Stützwand 12 dargestellt ist, gebildet sein. Am unteren Längsrand 16 der Stützwand 13 sind Stützrollen 17 mit im rechten Winkel zur Stützwand 13 ausgerichteten Achsen angeordnet. Die Stützrollen können gegebenenfalls angetrieben sein.

Im Bereich des oberen Längsrandes 18 der Stützwand 13 ist ein Balken 19 in Richtung des Pfeiles 20 verschiebbar gelagert. Am Balken 19 sind Vakuumsauger 21 vorgesehen, mit deren Hilfe jeweils eine Glasscheibe 22 aus einem der Fächer 2 entnommen werden kann. Zum Verschieben des Balkens 19 entlang des Doppelpfeiles 20 kann beispielsweise ein nicht dargestellter Druckmittelzylinder, ein Zahnstangengetriebe od.dgl. verwendet werden. Der Balken 19 ist in einer Nut 23 in der Stützwand 13 in Richtung seiner Längserstreckung verschiebbar gelagert. Die Vakuumsauger 21 wiederum sind in Richtung des Doppelpfeiles 24 verstellbar am Balken 19 angeordnet, so daß sie aus der in Fig. 3 gezeigten Stellung, in der sie vor der von dem Stützrollenfeld 14 oder den Förderbändern 15 definierten Auflageebene 25 liegen, in eine Stellung verschiebbar sind, in der ihre Saugfläche 26 mit der Auflageebene 25 fluchtet.

Die erfindungsgemäße Vorrichtung arbeitet beispielsweise wie folgt:
Zum Entnehmen einer Glasscheibe 22 aus einem Fach 2 wird die Breite des gewünschten Faches 2 vergrößert, indem der Abstand der das Fach 2 begrenzenden Rahmen 3 vergrößert wird. Anschließend wird der Kipptisch 8 neben dieses Fach 2 verfahren und die Stützwand 13 wird etwa in die vertikale Stellung hochgeschwenkt, wie in Fig. 2 dargestellt ist. Nun wird der Balken 19 in das Fach 2 geschoben, wie in Fig. 1 dargestellt ist. Die Stützwand 13 wird dann in Fig. 2 im Uhrzeigersinn noch weiter verschwenkt, bis die aus der Auflageebene 25 der Stützwand 13 vorgeschobenen Vakuumsauger 21 an der vordersten Glasscheibe 22 anliegen, worauf die Vakuumsauger 21 mit Unterdruck beaufschlagt werden. Anschließend wird die Stützwand 13 wieder entgegen den Uhrzeigersinn geschwenkt, bis die Glasscheibe 22 frei nach unten hängt und die Vakuumsauger 21 werden zurückgezogen, bis die Glasscheibe 22 an der Stützwand 13 anliegt Da die Stützwand 13 bzw. deren Auflageebene 25 in dieser Stellung von der Schwenkachse 14 des Kipptisches 8 horizontal beabstandet ist, wird die Glasscheibe 22 beim Schwenken in die vertikale Stellung automatisch etwas von der Auflage 4 abgehoben.

Der Balken 19 wird nun mit der an ihm hängenden Glasscheibe 22 wieder aus dem Fach herausgezogen (in Fig. 1 nach links), bis sich die Glasscheibe 22 völlig auf der Stützwand 13 des Kipptisches 8 befindet. Je nachdem ob die Glasscheibe 22 nun in etwa vertikaler Stellung oder flach aufliegend in waagrechter Stellung weitergefördert werden soll, wird die Stützfläche 13 entweder in eine etwa 6 bis 8° nach hinten geneigte Stellung oder völlig in die waagrechte Stellung umgekippt. Anschließend wird der Kipptisch 8 entweder zu einer weiteren Fördereinrichtung oder zu einer Bearbeitungsstation gefahren und die Glasscheibe an diese übergeben.

Selbstverständlich kann die erfindungsgemäße Vorrichtung nicht nur zum Entnehmen von Glasscheiben 22 aus Fächern 2 verwendet werden, sondern auch zum Abstapeln von Glasscheiben 22 in diesen.

Ein besonderer Vorteil, der sich bei der erfindungsgemäßen Vorrichtung beim Entnehmen von Glasscheiben 22 ergibt, ist der, daß die Glasscheibe 22 von den Vakuumsaugern 21 im Bereich ihres oberen Längsrandes ergriffen wird und auch dort vom Glasscheibenstapel zuerst abgehoben wird. Dadurch bildet sich ein Luftkeil, von dem aus Luft zwischen die abzunehmende Glasscheibe 22 und die darunterliegende Glasscheibe 22 eindringen kann, so daß die oberste Glasscheibe 22 nicht auf der unter bzw. neben dieser angeordneten Glasscheibe 22 "kleben" bleibt.

Um diesen Vorteil auch bei unterschiedlich hohen Glasscheiben ausnutzen zu können, kann gemäß einer in den Abbildungen nicht dargestellten Ausführungsform der Erfindung vorgesehen sein, daß der Abstand des Balkens 19 von den unteren Stützrollen 17 an der Stützwand 13 veränderbar ist, um die Vakuumsauger 21 immer im Bereich des oberen Randes der zu entnehmenden Glasscheibe 22 angreifen zu lassen.

Ein Ausführungsbeispiel der Erfindung kann wie folgt dargestellt werden:
Eine Vorrichtung zum Entnehmen von tafelförmigen Gegenständen 22, insbesondere Glasscheiben, die in Fächern 2 etwa vertikal stehend abgestapelt sind, weist einen Kipptisch 8 auf, der neben den Fächern 2 quer zur Ausrichtung der Fächer 2 verfahrbar ist. Am Kipptisch 8 ist im Bereich des oberen Längsrandes seiner Stützwand 13 ein Balken 11 gelagert, der in Richtung seiner Längserstreckung an der Stützwand 13 verschiebbar ist. Der Balken 19 ist in die Fächer 2 verschiebbar und am Balken 19 sind Vakuumsauger 21 vorgesehen.

Zum Entnehmen einer Glasscheibe 22 wird der Balken 19 in das entsprechende Fach 2 geschoben und der Kipptisch 8 in der Folge soweit geschwenkt, bis die Vakuumsauger 21 an der Glasscheibe 22 angreifen. Der Kipptisch 8 wird dann wieder zurückgeschwenkt, bis die Glasscheibe 22 frei am Balken 19 hängt und anschließend der Balken 19 mit der Glasscheibe 22 aus dem Fach 2 gezogen.

## Patentansprüche

1. Vorrichtung zum Entnehmen von tafelförmigen, etwa vertikal stehenden Gegenständen (22), insbesondere Glasscheiben aus Stapeln, mit einem Kipptisch (8), der nebem den Gegenständen angeordnet ist, und der einen Balken (19) aufweist, der in Richtung seiner Längserstreckung an einer Stützwand (13) des Kipptisches vor den Gegenständen verschiebbar gelagert ist, dadurch gekennzeichnet, daß der Balken (19) bei in eine etwa vertikale Lage verschwenktem Kipptisch (8) im Bereich des oberen, horizontalen Längsrandes der Stützwand (13) des Kipptisches (8) angeordnet ist und daß am Balken (19) Vakuumsauger (21) vorgesehen sind, die am oberen, horizontalen Randbereich des zu entnehmenden, tafelförmigen Gegenstandes (22) anlegbar sind.

2. Vorrichtung nach Anspruch 1, dadurch gekennzeichnet, daß an der Stützwand (13) des Kipptisches (8), gegebenenfalls antreibbare, Stützrollen (14) vorgesehen sind.

3. Vorrichtung nach Anspruch 1 oder 2, dadurch gekennzeichnet, daß an der Stützwand (13) des Kipptisches (8) Förderbänder (15) vorgesehen sind.

4. Vorrichtung nach einem der Ansprüche 1 bis 3, dadurch gekennzeichnet, daß im Bereich des unteren Längsrandes der Stützwand (13) des Kipptisches (8) eine Stützleiste vorgesehen ist.

5. Vorrichtung nach Anspruch 4, dadurch gekennzeichnet, daß an der Stützleiste Abstützrollen (17) vorgesehen sind.

6. Vorrichtung nach einem der Ansprüche 1 bis 5, dadurch gekennzeichnet, daß die Vakuumsauger (21) normal zur Ebene der Stützwand (13) des Kipptisches (8) verschiebbar sind.

7. Vorrichtung nach einem der Ansprüche 1 bis 6, dadurch gekennzeichnet, daß der Balken (19) an der Stützwand (13) quer zu seiner Längserstreckung in der Ebene der Stützwand (13) des Kipptisches (3) verschiebbar ist.

8. Vorrichtung zum Stapeln und zum Entnehmen von tafelförmigen Gegenständen (22), bei der die tafelförmigen Gegenstände (22) in zwischen Rahmen (3) der Vorrichtung zum Stapeln gebildeten Fächern (2) etwa vertikal stehend abgestapelt sind, mit einem Kipptisch mit den Merkmalen eines oder mehrerer der Ansprüche 1 bis 7, wobei der Kipptisch (8) neben den Fächern (2) quer zur Ausrichtung der Fächer (2) verfahrbar und der Balken (19) in die Fächer (2) verschiebbar ist.

9. Vorrichtung nach Anspruch 8, dadurch gekennzeichnet, daß der Abstand zwischen zwei ein Fach (2) begrenzenden Rahmen (3) veränderbar ist.

## Claims

1. Device for removing platelike objects (22) standing approximately vertically, especially glass panes from piles, said device having a tilting table (8) which is arranged beside the objects and which has a bar (19) which is mounted so as to be movable in front of the objects in the direction of its longitudinal extension on a supporting wall (13) of the tilting table, **characterised in that** the bar (19), when the tilting table (8) is swung into an approximately vertical position, is arranged in the region of the upper, horizontal longitudinal edge of the supporting wall (13) of the tilting table (8), and in that vacuum suction devices (21) are provided on the bar (19) which may be laid against the upper horizontal edge region of the platelike object (22) to be removed.

2. Device according to claim 1, **characterised in that** supporting rollers (14), driven if necessary, are provided on the supporting wall (13) of the tilting table (8).

3. Device according to claim 1 or 2, **characterised in that** conveyor belts (15) are provided on the supporting wall (13) of the tilting table (8).

4. Device according to one of claims 1 to 3, **characterised in that** a supporting strip is provided in the region of the lower longitudinal edge of the supporting wall (13) of the tilting table (8).

5. Device according to claim 4, **characterised in that** stay rollers (17) are provided on the supporting strip.

6. Device according to one of claims 1 to 5, **characterised in that** the vacuum suction devices (21) may be moved at right angles to the plane of the supporting wall (13) of the tilting table (8).

7. Device according to one of claims 1 to 6, **characterised in that** the bar (19) on the supporting wall (13) may be moved transversely to its longitudinal extension in the plane of the supporting wall (13) of the tilting table (8).

8. Device for stacking and for removing platelike objects (22), on which device the platelike objects (22) are stacked standing approximately vertically in compartments (2) formed between frames (3) of the device for stacking, said device having a tilting table with the features of one or more of claims 1 to 7, the tilting table (8) being able to be driven beside the compartments (2) transversely to the alignment of the compartments (2) and the bar (19) being able to be pushed into the compartments (2).

9. Device according to claim 8, **characterised in that** the distance between two frames (3) delimiting a compartment (2) may be adjusted.

## Revendications

1. Dispositif pour prélever des objets (22) en forme de plaques disposés sensiblement verticalement, notamment pour prélever des feuilles de verre dans un empilement, avec une table basculante (8) qui est disposée à proximité des objets et comporte une poutre (19) qui est montée mobile en translation devant les objets dans la direction de sa longueur sur une paroi d'appui (13) de la table basculante, caractérisé par le fait que la poutre (19), lorsque la table basculante (8) se trouve en position sensiblement verticale, est située dans la région du bord longitudinal supérieur horizontal de la paroi d'appui (13) de la table basculante (8) et par le fait qu'il est prévu sur la poutre (19) des ventouses (21) qui peuvent être appliquées sur l'objet (22) en forme de plaque à prélever, dans la région du bord supérieur horizontal de celui-ci.

2. Dispositif selon la revendication 1, caractérisé par le fait que des galets d'appui (14), éventuellement entraînés, sont prévus sur la paroi d'appui (13) de la table basculante (8).

3. Dispositif selon la revendication 1 ou 2, caractérisé par le fait que des bandes transporteuses (15) sont prévues sur la paroi d'appui (13) de la table basculante (8).

4. Dispositif selon une des revendications 1 à 3, caractérisé par le fait qu'une règle d'appui est prévue dans la région du bord longitudinal de la paroi d'appui (13) de la table basculante (8).

5. Dispositif selon la revendication 4, caractérisé par le fait que des galets d'appui (17) sont prévus sur la règle d'appui.

6. Dispositif selon une des revendications 1 à 5, caractérisé par le fait que les ventouses (21) peuvent être déplacées dans une direction normale au plan de la paroi d'appui (13) de la table basculante (8).

7. Dispositif selon une des revendications 1 à 6, caractérisé par le fait que la poutre (19) peut être déplacée sur la paroi d'appui (13) transversalement à sa direction longitudinale, dans le plan de la paroi d'appui (13) de la table basculante (8).

8. Dispositif pour empiler et prélever des objets (22) en forme de plaques dans lequel les objets (22) en forme de plaques sont empilés debout sensiblement verticalement dans des compartiments (2) d'empilement aménagés entre des cadres (3), avec une table basculante présentant les caractéristiques d'une ou plusieurs des revendications 1 à 7, dans lequel la table basculante (8) peut être déplacée à proximité des compartiments (2), transversalement à la direction d'orientation des compartiments (2) et la poutre (19) peut être avancée dans les compartiments (2).

9. Dispositif selon la revendication 8, caractérisé par le fait que que la distance entre deux cadres (3) définissant un compartiment (2) peut être modifiée.
